# EUROPÄISCHE PATENTSCHRIFT

(11) **EP 0 904 221 B1**
(45) Veröffentlichungstag und Bekanntmachung des Hinweises auf die Patenterteilung: **05.09.2001**
(21) Anmeldenummer: 98931922.3
(22) Anmeldetag: 15.04.1998
(51) Int. Cl.: B60T 7/04, B60T 11/16

(54) **BREMSWERTGEBER FÜR EINE ELEKTRISCH GESTEUERTE UND BETÄTIGTE BREMSANLAGE**
BRAKE POWER DETECTOR FOR AN ELECTRICALLY CONTROLLED AND ACTUATED BRAKING SYSTEM
TRANSDUCTEUR DE PUISSANCE DE FREINAGE POUR UNE INSTALLATION DE FREINAGE COMMANDEE ET ACTIONNEE ELECTRIQUEMENT

(30) Priorität: 16.04.1997 DE 19715912
(43) Veröffentlichungstag der Anmeldung: 31.03.1999
(73) Patentinhaber: SIEMENS AKTIENGESELLSCHAFT, 80333 München (DE)
(72) Erfinder: DEML, Ulrich, D-93138 Lappersdorf (DE); DOERICHT, Michael, D-93138 Lappersdorf (DE); EGLSEDER, Karl-Heinz, D-93055 Regensburg (DE); HUBER, Michael, D-93161 Eilsbrunn (DE)
(86) Internationale Anmeldenummer: DE9801058
(87) Internationale Veröffentlichungsnummer: WO9846461

(56) Entgegenhaltungen:
- EP-A- 0 768 224
- EP-A- 0 771 705
- DE-A- 4 324 041
- DE-A- 4 343 314

## Beschreibung

Bremspedalanordnung mit einem Bremswertgeber für eine elektrisch gesteuerte und betätigte Bremsanlage

Die Erfindung betriff eine Bremspedalanordnung mit einem Bremswertgeber für eine elektrisch gesteuerte und betätigte Bremsanlage gemäß Patentanspruch 1.

Bei Fremdkraftbremsanlagen für Kraftfahrzeuge besteht zwischen der Betätigungseinheit, d.h. dem Bremspedal, und den Radbremsen keine mechanische, pneumatische oder hydraulische Verbindung, wie dies bei herkömmlichen Bremsanlagen für Kraftfahrzeuge der Fall ist. Der Fahrer kann durch Betätigen des Bremspedals zwar die Bremskraft mittels geeigneter Steuervorrichtungen beeinflussen, aber seine Muskelkraft beim Betätigen des Bremspedals wird weder ganz noch anteilig zum Erzeugen der Bremswirkung genutzt.

Bisher werden Fremdkraftbremsanlagen in Straßenfahrzeugen serienmäßig nur für Nutzfahrzeuge, d.h. für Lastkraftwagen und Busse, verwendet. Dabei wird als Betriebsenergie Druckluft oder vorgespannte Federn, deren Kraft im gelösten Zustand durch die Kraft eines mit Druckluft beaufschlagten Pneumatikzylinders kompensiert wird, verwendet. Dabei wird die Bremswirkung über sogenannte Betriebsbremsventile dosiert, die mit dem Bremspedal mechanisch verbunden sind, und die je nach Pedalstellung und Pedalkraft einen entsprechenden Bremsdruck in den Radbremszylindern steuern (Bosch Technische Unterrichtung: Druckluftbremsanlagen, Geräte).

Wird die Betätigung der Radbremsen elektronisch gesteuert (ATZ Automobiltechnische Zeitschrift 98 (1996), Seiten 406 und 407; VDI Berichte Nr. 1188, 1995: Potential elektronisch geregelter Brems Systeme), so ist das Betriebsbremsventil mit Sensoren versehen, die den Verzögerungswunsch des Fahrers messen. Bei der Beschreibung eines Konzepts für eine elektromechanische Fahrzeugbremse (auch als "Brake by wire" bezeichnet), wird ein elektronisches Bremspedal mit redundant ausgeführter Sensorik erwähnt, mit dem der Fahrerwunsch erfaßt wird. Der so erfaßte Verzögerungswunsch wird dann in Form elektronischer Signale an das Brems- und Steuergerät übermittelt.

In ähnlicher Weise ist durch die DE 43 24 041 A1 eine Bremspedalanordnung mit einem Bremswertgeber für eine elektrisch gesteuerte und betätigte Bremsanlage bekannt, der mit dem Bremspedal verbunden ist und Betätigungen des Bremspedals mit mindestens einem Sensor erfasst und in elektrische Signale umsetzt.

Der Erfindung liegt die Aufgabe zugrunde, eine Bremspedalanordnung mit einem einen Bremswertgeber der eingangs genannten Art zu schaffen, der ein feinfühliges Dosieren der Bremswirkung bei leichter unterschiedlicher Einstellung der Pedalkraftkennlinie ermöglicht.

Diese Aufgabe wird erfindungsgemäß durch eine Bremspedalanordnung mit einem Bremswertgeber nach Anspruch 1 gelöst. Zweckmäßige Weiterbildungen der Erfindung sind jeweils Gegenstand der Unteransprüche.

Die erfindungsgemäße Bremspedalanordnung mit Pedalwertgeber benötigt weder eine mechanische noch eine hydraulische oder pneumatische Hilfsenergie; elektrische Energie wird lediglich für den Betrieb der Sensoren benötigt. Durch unterschiedliche Hydrauliköl-Füllmengen lassen sich auf einfache Weise der mit dem zu komprimierenden Gas gefüllte Druckraum variieren und somit unterschiedliche Pedalkraftkennlinien einstellen; so ist es - bei gleich ausgelegter Fremdkraftbremsanlage - zum Beispiel möglich, bei einem sportlichen Fahrzeug eine etwas härtere Pedalkraftkennlinie, d.h. mit höheren Betätigungskräften bei gleichem Pedalweg, als bei einer komfortbetonten Limousine einzustellen.

Ausführungsbeispiele der Erfindung werden im folgenden anhand der Zeichnungen erläutert. Es zeigen:
- Figur 1: eine elektrisch gesteuerte und betätigte Bremsanlage eines Kraftfahrzeugs, in der eine Bremspedalanordnung mit einen Bremswertgeber nach der Erfindung benutzt wird;
- Figur 2: ein erstes Ausführungsbeispiel einer erfindungsgemäßen Bremspedalanordnung;
- Figur 3: ein zweites Ausführungsbeispiel einer erfindungsgemäßen Bremspedalanordnung;
- Figur 4: einen Druckzylinder einer erfindungsgemäßen Bremspedalanordnung;
- Figur 5: ein anderes Ausführungsbeispiel einer erfindungsgemäßen eine Bremspedalanordnung mit einem Bremswertgeber mit einem stehenden Bremspedal;
- Figur 6: ein weiteres Ausführungsbeispiel einer erfindungsgemäßen eine Bremspedalanordnung mit einem Bremswertgeber mit einem hängenden Bremspedal, und
- Figur 7: eine Kennlinie der Bremswertgeber nach den Figuren 2 bis 5.

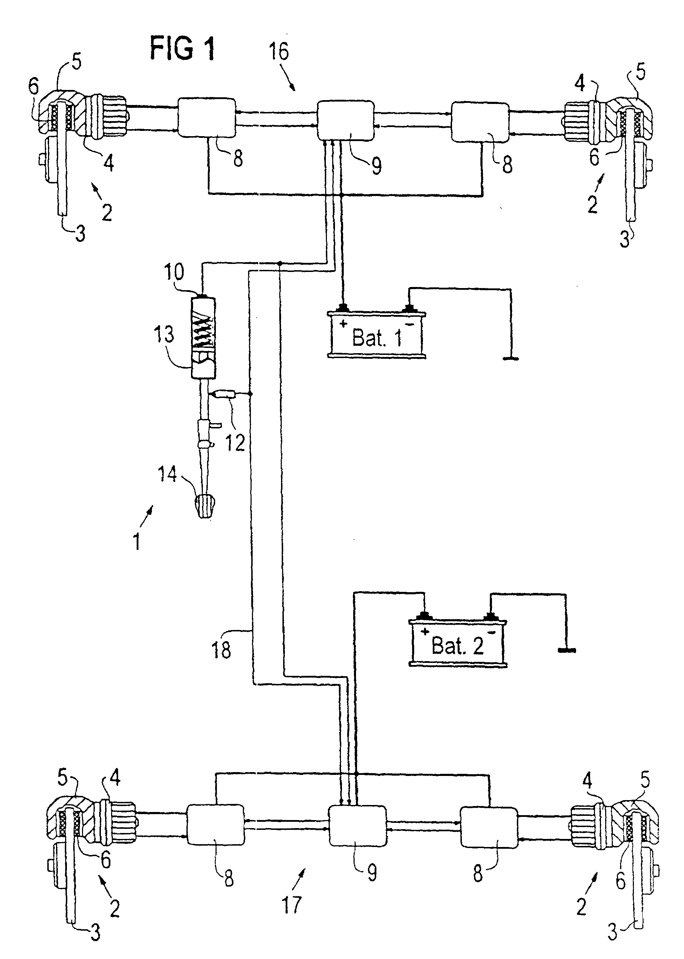

Eine Bremsanlage 1 (Figur 1) für ein Kraftfahrzeug mit vier Rädern (das hier nicht weiter dargestellt ist) enthält vier Bremsen 2, die je eine Bremsscheibe 3 und eine Betätigungsvorrichtung in Gestalt eines Radbremsaktors 4 - im folgenden auch als -Aktuator oder Aktor bezeichnet -, einschließen. Die Radbremsaktoren 4 sind in je einen zugehörigen Bremssattel 5 integriert, d.h. mit ihm zu einer Baueinheit zusammengefaßt. Der Bremssattel 5 ist als Schwimmsattel ausgebildet. Über Bremsbeläge 6 wird bei Betätigung des Radbremsaktors 4 ein Bremsmoment auf die Bremsscheibe 3 ausgeübt.

Jeder Radbremsaktor 4 verfügt über eine Leistungs- und Steuerelektronik 8, die von einem zugehörigen Steuergerät 9 mit Steuersignalen, zum Beispiel für die von dem Radbremsaktor 4 aufzubringenden Sollkraft oder -druck, versorgt wird und an das Steuergerät 9 Rückmeldegrößen, zum Beispiel über den Istwert der Kraft, liefert.

Die Leistung- und Steuerelektronik 8 erhält von dem Radbremsaktor 4 ebenfalls Rückmeldegrößen, zum Beispiel über die Anpreßkraft, mit der die Bremsbeläge 6 durch den Bremsaktor 24 gegen die Bremsscheibe 3 gedrückt werden. Die Sollgrößen für jeden Radbremsaktor werden von der Steuereinheit 9 aus Meßgrößen ermittelt, die von verschiedenen Sensoren geliefert werden, zum Beispiel einem Kraftsensor 10 und einem Wegsensor 12, mit denen ein Bremswertgeber oder Pedalkraftsimulator 13 versehen ist, der durch das Bremspedal 14 des Kraftfahrzeugs betätigt wird. Der Pedalkraftsimulator 13 setzt die Bewegung des Bremspedals 14, d.h. die von dem Fahrer wie gewohnt ausgeübte Kraft und den Pedalweg in elektrische Signale um, die dem Steuergerät 9 zugeführt werden und Sollwerte für die Bremsen 2, insbesondere für die Fahrzeugverzögerung und das auf die Bremsscheiben aufzubringende Dreh- oder Bremsmoment darstellen. Zum Berechnen der Sollwerte bei einem Eingriff von Antiblockier- oder Fahrstabilitätsregelungen können von dem Steuergerät 9 weitere Sensorsignale, zum Beispiel der Querbeschleunigung oder der Gierwinkelgeschwindigkeit und der Raddrehzahlen, ausgewertet werden.

Die Bremsanlage 1 weist zwei Bremskreise 16 und 17 auf, die auf die Vorderachse und die Hinterachse aufgeteilt sind. Eine genau so gut mögliche Diagonalbremskreisaufteilung unterscheidet sich hiervon nur durch eine veränderte Zuordnung der Radbremsaktoren zu den Steuergeräten und Energieversorgungen. Jeder Bremskreis 16, 17 verfügt über ein eigenes Steuergerät 9 und eine eigene Energieversorgung in Form einer Batterie Bat. 1 bzw. Bat. 2. Die Energieversorgungen und die Steuereinheiten können dabei jeweils in einem Gehäuse untergebracht werden, müssen dann aber funktionell voneinander getrennt sein.

Versorgungsleitungen sind in der Figur 1 dick eingezeichnet und nicht mit Pfeilen versehen, Steuer- und Signalleitungen sind dünn eingezeichnet und mit Pfeilen entsprechend der Signalflußrichtung versehen.

Die beiden unabhängig voneinander arbeitenden Steuergeräte 9 können über eine aus der Zeichnung ersichtliche bidirektionale Signalleitung miteinander kommunizieren und dadurch den Ausfall eines Bremskreises 16 oder 17 in dem jeweils anderen Bremskreis erkennen und ggf. geeignete Notmaßnahmen ergreifen. Die Bremsanlage kann auch um ein drittes - hier nicht dargestelltes - Steuergerät, das als Supervisor die beiden Bremskreissteuergeräte überwacht, ergänzt werden.

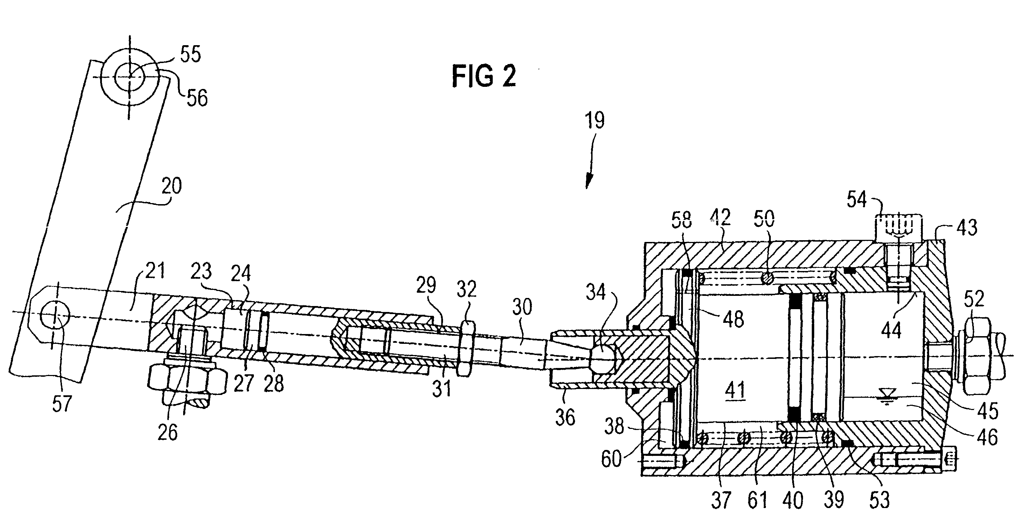

Ein erstes Ausführungsbeispiel eines erfindungsgemäßen Bremswertgebers 19 ist mit einem Bremspedal 20 durch eine drehbar gelagerte Anlenkgabel 21 verbunden (Figur 2). Diese weist eine zylindrische Bohrung 23 auf, deren eines Ende als Druckraum 24 ausgebildet ist. An den Druckraum 24 ist über eine seitliche Gewindebohrung ein erster Drucksensor 26 angeschlossen. In der zylindrischen Bohrung 23 ist ein Druckstangenkolben 27 verschiebbar untergebracht. Dieser Druckstangenkolben 27 ist mit einer Nut und einer darin enthaltenen Dichtung 28 versehen, die ein Austreten von Hydraulikflüssigkeit verhindert, die in dem Druckraum 24 enthalten ist.

Das andere Ende des Druckstangenkolbens 27 weist ein Innengewinde 29 auf, in das eine Druckstange 30 mit ihrem als Gewindebolzen 31 ausgeführten (in der Zeichnung links liegenden) Ende eingeschraubt ist. Um ein ungewolltes Lösen dieser Schraubverbindung zu verhindern, ist eine Sicherungsmutter 32 vorgesehen, das andere Ende der Druckstange 30 ist als Kugelkopf 34 ausgebildet und in einer Bohrung einer Stahlbüchse 36 gelagert. Diese Stahlbüchse 36 ist in eine zylindrische Bohrung eines Kolbens 37 eingepreßt und dadurch kraftschlüssig mit diesem verbunden. Der Kolben weist einen (in der Zeichnung) links liegenden Absatz oder Schaft 48 mit einer ringförmigen Nut auf, die eine Pneumatikdichtung 38, vorzugsweise einen O-Ring, aufnimmt. An seinem anderen Ende weist der Kolben 37 zwei weitere ringförmige Nuten auf, von denen die äußere einen Filzring 39 und die innere eine zweite Hydraulikdichtung 40 aufnimmt. Dieser (in der Zeichnung) rechts liegende Bereich 41 des Kolbens 37 weist einen kleineren Durchmesser auf als der Schaft 48.

Der Kolben 37 ist mit seinem Schaft 48 im Innern eines hohlen Zylinders 42 und mit seinem Bereich 41 im Innern eines den Zylinder verschließenden Deckelteils 43 verschiebbar geführt. Die (in der Zeichnung rechts liegende) Stirnfläche des Bereichs 41 des Kolbens 37 und der zylindrische Innenraum 44 des Deckelteils 43 bilden einen veränderlichen Druckraum 45, der zum Teil mit einem Hydrauliköl 46 und darüberliegend mit einem Gas oder Gasgemisch, zum Beispiel mit Luft, gefüllt ist.

Der Filzring 39 nimmt Hydrauliköl auf und befördert es durch Kapillarwirkung auch an den oberen Teil der Wandung des zylindrischen Innenraums 44. Dadurch ist immer eine ausreichende Benetzung der Zylinderwandung und damit eine einwandfreie Funktion der Hydraulikdichtung 40 gewährleistet.

An dem Deckelteil 43 stützt sich eine Rückstellfeder 50 ab, deren anderes Ende gegen einen Absatz oder Schaft 48 des Kolbens 37 drückt und die somit bestrebt ist, den Kolben in seine Ausgangslage zu verschieben. In das Deckelteil 43 ist ein zweiter Drucksensor 52 eingeschraubt, der den Druck in dem Druckraum 45 erfaßt. Das Deckelteil 43 ist durch eine Deckeldichtung 53 gegen den Innenraum des Zylinders 42 abgedichtet. Der Zylinder 42 und das Deckelteil 43 sind mit einer Bohrung versehen, in die eine Öleinfüllschraube 54 eingeschraubt ist. Über die die Öleinfüllschraube 54 aufnehmende Bohrung kann Hydrauliköl in den Druckraum 45 eingebracht und kontrolliert werden. Anstelle von Hydrauliköl kann auch eine andere geeignete Flüssigkeit, die Schmiereigenschaften aufweist, verwendet werden..

In einem Dreh- und Lagerpunkt 55 des Bremspedals 20 ist ein Drehwinkelsensor 56 angebracht, der den beim Betätigen des Bremspedals 20 überstrichenen Drehwinkel mißt. Aus diesem kann mit der Pedallänge der Pedalweg berechnet werden.

Beim Betätigen des Bremspedals 20 wird über die Anlenkgabel 21 das Hydrauliköl, das in dem Druckraum 24 enthalten ist, komprimiert. Wegen der geringen Kompressibilität des Hydrauliköls und dem kleinen Füllvolumen in dem Druckraum 24 wird für die Kompression nur ein sehr geringer Weg benötigt, der an dem Bremspedal 20 für den Fahrer nicht spürbar ist. Aus dem Druck in dem Druckraum 24 kann die auf die Druckstange 30 ausgeübte Kraft berechnet werden, wobei die Reibungskraft zwischen der Wand der zylindrischen Bohrung 23 und dem Druckstangenkolben 27 vernachlässigt werden kann. Diese Kraft wird über den Kugelkopf 34 und die Stahlbüchse 36 auf den Kolben 37 übertragen und bewegt diesen gegen die Kraft der Rückstellfeder 50 in den Druckraum 45 des Zylinders 42 hinein.

Die in dem Druckraum 45 eingeschlossene Luft wird soweit komprimiert, bis der dadurch aufgebaute Druck auf den Kolben 37 eine Reaktionskraft ausübt, die gleich der Kraft in der Druckstange 30 abzüglich der Kraft der Rückstellfeder und der Reibungskräfte ist. Aus dem Meßsignal des zweiten Drucksensors 52 läßt sich diese Kraft berechnen. Der Druck in dem Druckraum 45 nimmt exponentiell mit dem Kolbenweg zu. Daraus ergibt sich eine stark progressive Pedalkennlinie. Durch Verändern der Menge des Hydrauliköls 46, das verglichen mit der Luft praktisch inkompressibel ist, kann das Gasvolumen in dem Volumen in dem Druckraum 45 verändert und damit die Weg-Druck-Kennlinie beeinflußt werden.

Die Ansprechkraft des Bremswertgebers 19 wird durch die Vorspannung der Rückstellfeder 50 bestimmt und läßt sich somit ebenfalls verändern.

Eine weitere Möglichkeit, die Kennlinie des Bremswertgebers zu verändern, wird durch ein Einbringen von einer oder mehrerer Drosselbohrungen 58 in den Schaft 48 des Kolbens 37 erreicht. Diese Drosselbohrungen 58 stellen eine pneumatische Verbindung zwischen einem Ausgleichsraum 60, der zwischen der linken Stirnwand des Schafts 48 und dem Innenraum des Zylinders 42 liegt, und einem Ringraum 61, in dem die Rückstellfeder 50 angeordnet ist. Durch die Drosselbohrungen 58 wird in dem Ringraum 61 ein Druckaufbau verringert oder verhindert, der eine zusätzliche Rückstellkraft bewirken würde. Ein weiterer Vorteil der Drosselbohrungen ist, daß mit ihnen die Dämpfung der Kolbenbewegung gezielt eingestellt werden kann.

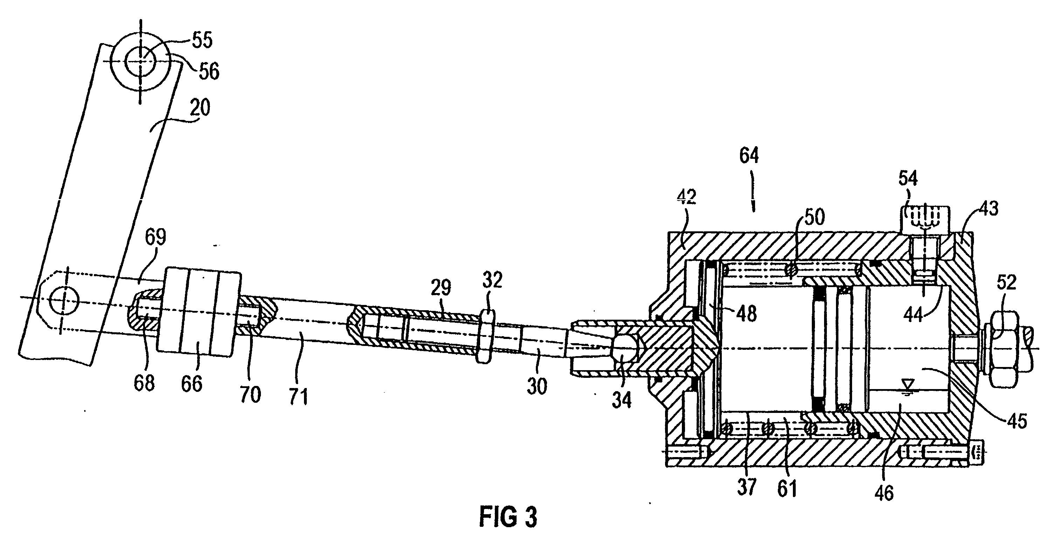

Bei einem zweiten Ausführungsbeispiel eines erfindungsgemäßen Bremswertgebers 64, (Figur 3) wird die in der Druckstange 30 auftretende Kraft nicht mit einem Drucksensor, sondern mit einem Kraftsensor 66 erfaßt. Dieser weist einen ersten Gewindezapfen 68 auf, der in die Anlenkgabel 69 eingeschraubt ist und einen zweiten Gewindezapfen 70, der mit einer Führungsstange 71 verschraubt ist. Der Kraftsensor 66 erfaßt die in der Führungsstange auftretende Kraft und setzt sie in ein elektrisches Signal um. Außerdem verbindet er die Anlenkgabel 69 mit der Führungsstange 71 mechanisch. Diese Ausführung hat den Vorteil, daß auf einen Druckraum, einen Druckstangenkolben und Hydraulikflüssigkeit in der Druckstange verzichtet werden kann und somit der Bauteileaufwand verringert wird. Die weiteren Bestanteile des Bremswertgebers 64 entsprechen genau denen des Bremswertgebers 19 von Figur 2.

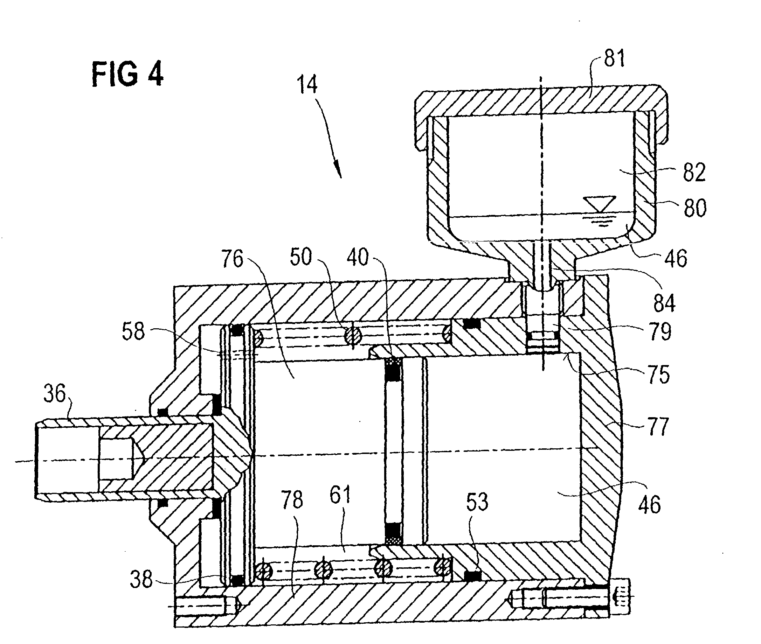

Bei einem weiteren Ausführungsbeispiel der Erfindung unterscheidet sich der Druckzylinder von dem vorstehend beschriebenen Druckzylinder 42. Ein Innenraum 75 (Figur 4), der von einem Kolben 76 und der Innenwand eines Deckelteils 77 eines Zylindergehäuses 78 gebildet wird, ist zur besseren Benetzung der zylindrischen Innenraum vollständig mit Hydrauliköl 46 gefüllt. Über eine Bohrung 79 steht der Innenraum 75 mit dem Innenraum eines Druckbehälters 80 in Verbindung. Dieser ist nur teilweise mit Hydrauliköl befüllt, enthält also auch Gas oder Gasgemische - beispielsweise Luft - und bildet einen durch einen Verschluß 81 abgeschlossenen Druckraum 82.

Wird der Kolben 76 durch eine auf die Stahlbüchse 36 einwirkende Kraft nach rechts bewegt, strömt das Hydrauliköl 46 aus dem Innenraum 75 in den Druckbehälter 80 und verdichtet dort im wesentlichen nur die Luft in dem Druckraum 82, da die Kompressibilität des Hydrauliköls wie erwähnt wesentlich geringer ist als die der Luft. Damit ergibt sich auch hier die erfindungsgemäße Kraft-Weg-Kennlinie. Über den Querschnitt einer Strömungsbohrung 84 zwischen der Gewindebohrung 79 und dem Druckraum 82 kann die Dämpfung des Bremswertgebers eingestellt werden.

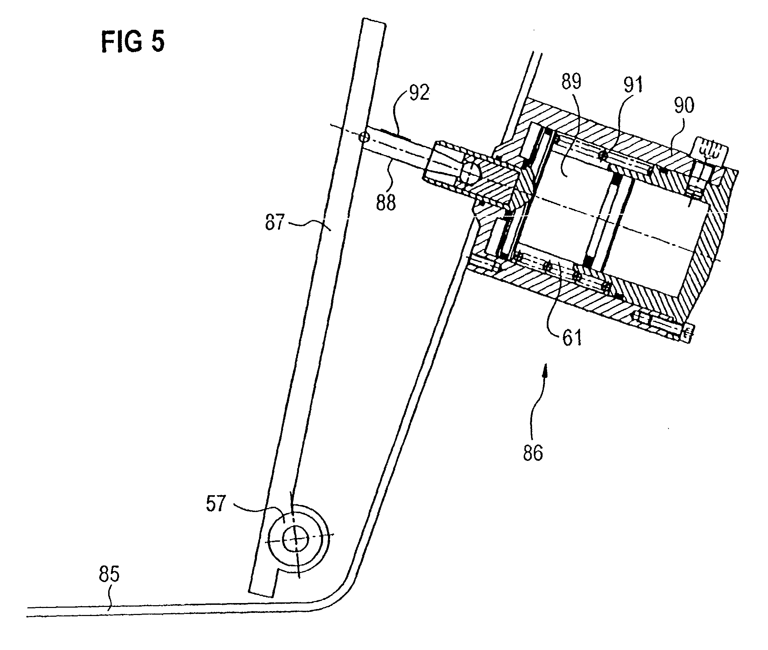

Ein weiteres Ausführungsbeispiel einer erfindungsgemäßen Bremspedalanordnung mit einen Bremswertgeber 86 (Figur 5) ist für ein stehendes, d.h. an seinem unteren Ende drehbar gelagertes, Bremspedal 87 vorgesehen. Dieser Bremswertgeber ist, wie die bislang beschriebenen Ausführungsbeispiele auch, an einem Bodenblech 85 des Kraftfahrzeugs befestigt. Eine Druckstange 88 ist kürzer als bei den zuvor beschriebenen Ausführungen. Wegen der hier kleineren Hebelübersetzung sind die Kräfte auf den Kolben 89 in dem Druckzylinder 90 geringer, so daß die Rückstellfeder 91 schwächer ausgelegt werden kann. Auch die Abmessungen des Druckzylinders und des Kolbens sind geringer, was sich günstig auf den Einbauraum und das Gewicht des Bremswertgebers 86 auswirkt.

Durch die kleineren Abmessungen des Bremswertgebers ragt dieser nicht mehr soweit in den Motorraum hinein, wodurch sich im Falle eines Unfalls mit Frontalaufprall ein geringeres Verletzungsrisiko ergibt, da das Pedal nicht mehr soweit in den Fahrgastraum eindringen kann. Ein Kraftsensor 92 ist hier als Dehnmeßstreifen, der auf die Druckstange 88 aufgeklebt ist, ausgebildet. Auch hierdurch wird der Aufwand für die Kraftmessung verringert. Zur Wegmessung dient entweder der Drehwinkelsensor 57 oder es wird ein (in der Zeichnung nicht dargestelltes) Linearpotentiometer zwischen dem Bremspedal 87 und dem Bremswertgeber 86 eingefügt.

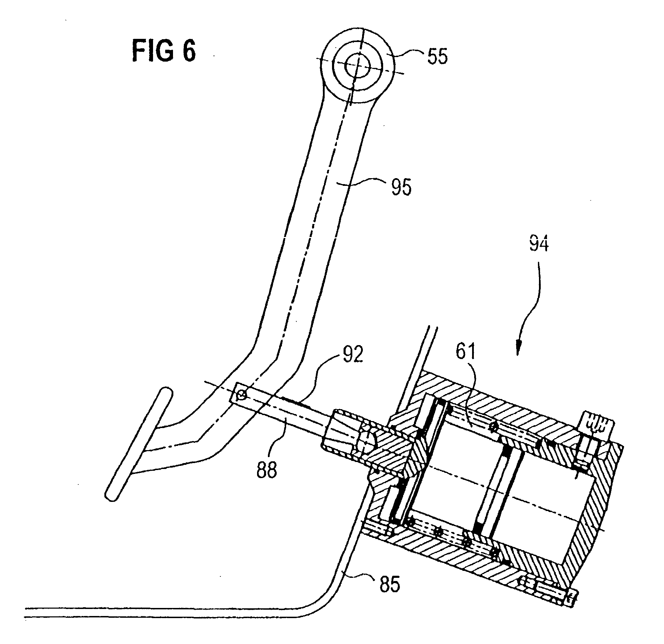

Ein weiteres Ausführungsbeispiel einer Bremspedalanordnung mit einen Bremswertgeber 94 (Figur 6) ist für ein hängendes, d.h. an seinem oberen Ende drehbar gelagertes Bremspedal 95 vorgesehen, es entspricht ansonsten in seinem Aufbau und in seiner Funktionsweise dem vorstehend beschriebenen Bremswertgeber 86.

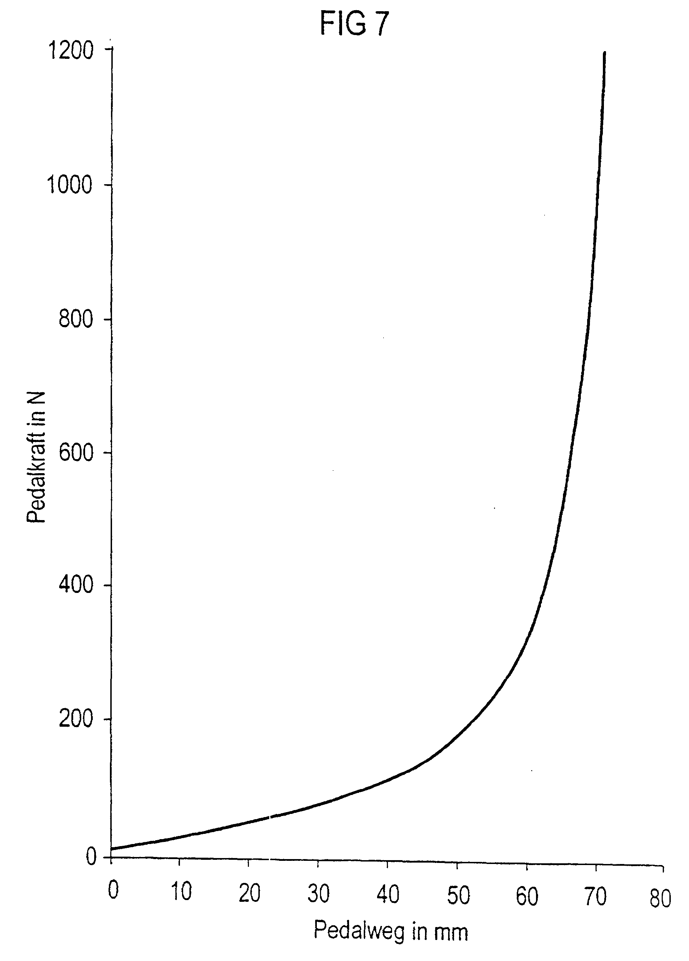

Aus Figur 7 ist eine typische Kennlinie einer erfindungsgemäßen Bremspedalanordnung mit einen Bremswertgeber ersichtlich, die die auf das Bremspedal einwirkende Pedalkraft (in N) als Funktion des Pedalwegs (in mm) wiedergibt. Charakteristisch ist die starke Zunahme der Pedalkraft mit steigendem Weg, was als progressive Kraft-Weg-Kennlinie bezeichnet wird. Eine solche Kennlinie ist sehr vorteilhaft, da sie die Bremsanlage eines Kraftfahrzeugs sehr angemessen zu bedienen ermöglicht. Bei Bremsungen mit geringer Verzögerung, d.h. bei Normalbremsungen, erlaubt das anfangs über einen ausreichend langen Pedalweg verhältnismäßig "weiche" Pedal eine sehr feinfühlige Dosierung der Bremswirkung. Bei einer Notbremsung wird das Pedal von dem Fahrer schnell und mit hoher Fußkraft durchgetreten. Um die Reaktionszeit kurz zu halten, soll der Pedalweg dabei möglichst geringe Zeit erfordern. Die weiche Zone mit geringer Pedalkraft wird schnell durchschritten und die Pedalkraft steigt danach mit sehr geringem Wegbedarf stark an.

Idealerweise wird der Bremswertgeber so abgestimmt, daß die maximale Pedalkraft, die von einem normalen Fahrer aufgebracht werden soll, bei dem ergonomisch günstigsten Pedalweg auftritt. Da hier keine mechanische Verbindung mit dem eigentlichen Bremssystem besteht, kann das Pedalgefühl unabhängig von der Ausführung der Bremsanlage und dem Typ des Kraftfahrzeugs frei bestimmt werden. Die Abstimmung der Pedalkennlinie erfolgt dabei über die Vorspannung und die Steifigkeit der Rückstellfeder, den Durchmesser und die Länge des Druckraums und die Menge der Ölfüllung im Druckraum. Die Dämpfung des Bremspedals kann über Drosselbohrungen im Kolbenabsatz oder durch die Strömungsbohrung im Druckbehälter eingestellt werden. Durch die Verwendung von Gas, d.h. von Luft, als Kompressionsmedium läßt sich auf einfache Weise eine progressive Kennlinie realisieren, die es ermöglicht, verhältnismäßig große Kräfte aufzubringen. Sollte das Aufbringen der gleichen Kräfte durch eine progressive Feder ermöglicht werden, so wäre ein erheblicher Aufwand an Bauraum und Gewicht für eine geeignete Federkonstruktion nötig.

Die Befüllung der verschiedenen Zylinder mit Hydrauliköl gewährleistet eine sehr gute Dichtwirkung und damit eine lange Lebensdauer. Ein erfindungsgemäßer Bremswertgeber ist ein wartungsfreies Bauteil über die gesamte Lebensdauer des Kraftfahrzeugs. Daraus, daß in dem Bremswertgeber drei Sensoren eingesetzt werden, ergibt sich eine große Betriebssicherheit. In den beschriebenen Ausführungsbeispielen werden zwei Druck- oder Kraftsensoren und ein Wegsensor verwendet, es kann aber auch eine Kombination aus zwei Wegsensoren und einem Druck- oder Kraftsensor verwendet werden. Bei Ausfall eines Sensors läßt sich mit den übrigen zwei Sensoren zweifelsfrei der defekte Sensor identifizieren.

Da außer den Sensoren nur mechanische Bauteile verwendet werden und zudem zum Betrieb des Bremswertgebers außer einem sehr geringen Bedarf an elektrischer Energie zum Versorgen der Sensoren keine weitere Energie benötigt wird, ist die Ausfallsicherheit des Bremswertgebers sehr groß. Die auf verschiedene Arten mögliche Messung des Pedalwegs und der Pedalkraft ergibt eine weitgehende Freiheit bei dem Ermitteln des Verzögerungswunsches. Beispielsweise kann in dem weichen Bereich der Pedalkennlinie das Wegsignal aufgrund seiner besseren Auflösung bevorzugt gewichtet werden, während bei hohen Pedalkräften das Kraftsignal höher bewertet wird, da dort die Wegauflösung nicht so hoch ist. Insbesondere läßt sich eine strikte Proportionalität zwischen der Verzögerung des Fahrzeugs und der Pedalbetätigungskraft erreichen. Weiterhin lassen sich gezielte Rückmeldungen vorsehen, so z.B. eine Zunahme der notwendigen Pedalkraft beim Auftreten von starkem Bremsfading. In diesem Fall wird von der Proportionalität zwischen der Pedalkraft und der Fahrzeugverzögerung bewußt abgewichen um dem Fahrer zu signalisieren, daß eine Überlastung der Bremsen droht, falls er seinen Fahrstil nicht ändert.

Bei weiteren Beispielen der erfindungsgemäßen Bremspedalanordnung mit einen Bremswertgeber bildet der mit Luft oder Gas gefüllte Ringraum 61 zwischen dem Kolben 37 und dem äußeren Zylinder 42 (siehe die Figuren 2 bis 6) einem Druckraum, dessen Inhalt beim Betätigen des Bremspedals komprimiert wird und dabei die auf das Bremspedal einwirkende Reaktionskraft erhöht. Der Druckraum 45 kann dabei entfallen und die Rückstellfeder ist nicht in allen Fällen erforderlich. Dadurch vereinfacht sich die Konstruktion der Bremswertgeber 19, 64, 74, 86 und 94 merklich.

Die Größe der Reaktionskraft kann durch Festlegung des Volumens des Ringraums 61 eingestellt werden, und der Einfluß der Reaktionskraft auf die Bremsbetätigung kann auch durch Wahl der Hebelübersetzung des Bremspedals 20 oder 95 an die jeweiligen Erfordernisse angepaßt werden.

## Patentansprüche

1. Bremspedalanordnung mit einem Bremswertgeber (19) für eine elektrisch gesteuerte und betätigte Bremsanlage, der mit dem Bremspedal (20) eines Kraftfahrzeugs verbunden ist und der Betätigungen des Bremspedals mit mindestens einem Sensor (26) erfasst und in elektrische Signale umwandelt,
- bei dem das Bremspedal über eine drehbar gelagerte Druckstange (30) mit einem im Innern eines Zylinders (42 bzw.78) verschiebbaren Kolben (37) verbunden ist;
- bei dem der Zylinder (42 bzw.78) mit einem mit Gas und zumindest teilweise mit einem Hydrauliköl (46) gefüllten Druckraum (45 bzw.82) verbunden ist;
- bei dem das Hydrauliköl (46) den mit Gas gefüllten Teil des Druckraums (45 bzw.82) veränderlichen Volumens begrenzt;
- bei dem das Gas durch den Kolben (37 bzw.76) bei einer Betätigung des Bremspedals (20) komprimiert und dabei die auf das Bremspedal (20) einwirkende Reaktionskraft erhöht wird.

2. Bremspedalanordnung nach Anspruch 1, **dadurch gekennzeichnet**, dass in dem Innenraum (44) des Zylinders (42 bzw.78) eine Rückstellfeder (50) angeordnet ist, durch die der Kolben (37 bzw.76) in seine Ausgangslage gedrückt wird.

3. Bremspedalanordnung nach einem der vorhergehenden Ansprüche, **dadurch gekennzeichnet**, dass der Kolben (37 bzw.76) eine einen Filzring (39) aufnehmende Nut aufweist, und dass die Wandungen des Innenraums (44) von dem mit dem Hydrauliköl (46) in Berührung stehenden Filzring (39) durch Kapillarwirkung mit Hydrauliköl benetzt werden.

4. Bremspedalanordnung nach einem der vorhergehenden Ansprüche, **dadurch gekennzeichnet**, dass die Druckstange (30) einen Kolben (27) aufweist, der in eine mit Hydrauliköl gefüllten Zylinderbohrung (23) hineinragt, und dass die Zylinderbohrung mit einem Drucksensor (26) verbunden ist, durch den die auf die Druckstange (30) einwirkende Pedalkraft erfasst wird.

5. Bremspedalanordnung nach einem der vorhergehenden Ansprüche, **dadurch gekennzeichnet**, dass der Druckraum (45) mit einem Drucksensor (52) verbunden ist, durch den der von dem Kolben (37) erzeugte Gasdruck erfasst wird.

6. Bremspedalanordnung nach einem der vorhergehenden Ansprüche, **dadurch gekennzeichnet**, dass die Druckstange (30) mit einem Kraftsensor (66) verbunden ist, durch den die bei einer Betätigung des Bremspedals (20) auf sie einwirkende Kraft erfasst wird.

7. Bremspedalanordnung nach einem der vorhergehenden Ansprüche, **dadurch gekennzeichnet**, dass der Druckraum (45) als Teil des Innenraums (44) des Zylinders (37) ausgebildet ist.

8. Bremspedalanordnung nach einem der vorhergehenden Ansprüche 1-6, **dadurch gekennzeichnet**, dass der Druckraum (82) als von dem Zylinder (78) gesonderter Druckbehälter ausgebildet ist und mit dem mit Hydrauliköl (46) gefüllten Innenraum (75) des Zylinders über eine Bohrung (79) in Verbindung steht.

9. Bremspedalanordnung nach einem der vorhergehenden Ansprüche, **dadurch gekennzeichnet**, dass der Kolben (37) aufweist einen Schaft (48) größeren Durchmessers, der im Innern des Zylinders (37) geführt ist, und einen Bereich (41) kleineren Durchmessers, der im Innern eines den Zylinder (37) verschließenden Deckelteils (43) geführt ist.

10. Bremspedalanordnung nach Anspruch 9, **dadurch gekennzeichnet**, dass der Schaft (48) mit mindestens einer Drosselbohrung (58) versehen ist, die einen den Kolben (37) umgebenden Ringraum (61) mit einem außerhalb des Kolbens liegenden Ausgleichsraum (60) verbindet.

11. Bremspedalanordnung nach Anspruch 10, **dadurch gekennzeichnet**, dass der Schaft (48) mit mindestens einer Drosselbohrung (58) versehen ist, die einen den Kolben (37) umgebenden Ringraum (61) mit einem außerhalb des Kolbens liegenden Ausgleichsraum (60) verbindet.

## Claims

1. Brake pedal arrangement having a brake value signal transmitter (19) for an electrically controlled and activated brake system which is connected to the brake pedal (20) of a motor vehicle and which senses activations of the brake pedal with at least one sensor (26) and converts them into electrical signals,
- in which the brake pedal is connected via a rotatably mounted pressure rod (30) to a piston (37) which can be displaced in the interior of a cylinder (42 or 78);
- in which the cylinder (42 or 78) is connected to a pressure space (45 or 82) which is filled with gas and at least partially with a hydraulic oil (46);
- in which the hydraulic oil (46) bounds the gas-filled part of the pressure space (45 or 82) with a variable volume;
- in which the gas is compressed by the piston (37 or 76) when the brake pedal (20) is activated, and in the process the reaction force acting on the brake pedal (20) is increased.

2. Brake pedal arrangement according to Claim 1, **characterized in that** a return spring (50) by which the piston (37 or 76) is pressed into its starting position is arranged in the interior (44) of the cylinder (42 or 78).

3. Brake pedal arrangement according to one of the preceding claims, **characterized in that** the piston (37 or 76) has a groove which receives a felt ring (39), and in that the walls of the interior (44) of the felt ring (39) which is in contact with the hydraulic oil (46) are wetted with hydraulic oil by capillary action.

4. Brake pedal arrangement according to one of the preceding claims, **characterized in that** the pressure rod (30) has a piston (27) which projects into a cylinder hole (23) which is filled with hydraulic oil, and in that the cylinder hole is connected to a pressure sensor (26) by which the pedal force acting on the pressure rod (30) is sensed.

5. Brake pedal arrangement according to one of the preceding claims, **characterized in that** the pressure space (45) is connected to a pressure sensor (52) by which the gas pressure generated by the piston (37) is sensed.

6. Brake pedal arrangement according to one of the preceding claims, **characterized in that** the pressure rod (30) is connected to a force sensor (66) by which the force acting on said pressure rod (30) when the brake pedal (20) is being activated is sensed.

7. Brake pedal arrangement according to one of the preceding claims, **characterized in that** the pressure space (45) is embodied as part of the interior (44) of the cylinder (37).

8. Brake pedal arrangement according to one of the preceding claims, **characterized in that** the pressure space (82) is embodied as a pressure vessel which is separate from the cylinder (78) and which is connected to the interior (75), filled with hydraulic oil (46), of the cylinder via a drilled hole (79).

9. Brake pedal arrangement according to one of the preceding claims, **characterized in that** the piston (37) has a stem (48) with a relatively large diameter which is guided in the interior of the cylinder (37), and an area (41) for the relatively small diameter which is guided in the interior of a lid component (43) which closes off the cylinder (37).

10. Brake pedal arrangement according to Claim 9, **characterized in that** the stem (48) is provided with at least one throttle hole (58) which connects an annular space (61) surrounding the piston (37) to an equalization space (60) located outside the piston.

11. Brake pedal arrangement according to Claim 10, **characterized in that** the stem (48) is provided with at least one throttle hole (58) which connects an annular space (61) surrounding the piston (37) to an equalization space (60) located outside the piston.

## Revendications

1. Dispositif à pédale de frein comportant un transducteur (19) de puissance de freinage pour un système de freinage commandé et actionné électriquement, transducteur qui est relié à la pédale (20) de frein d'un véhicule automobile et qui enregistre les actionnements de la pédale de frein à l'aide d'au moins un capteur (26) et les transforme en signaux électriques, suivant lequel
- la pédale de frein est reliée, par l'intermédiaire d'une tige (30) de pression montée à rotation, à un piston (37) pouvant coulisser à l'intérieur d'un cylindre (42 ou 78) ;
- le cylindre (42 ou 78) est relié à une chambre (45 ou 82) de pression remplie de gaz et au moins partiellement d'une huile (46) hydraulique ;
- l'huile (46) hydraulique délimite la partie remplie de gaz de la chambre (45 ou 82) de pression de volume variable ;
- le gaz est comprimé par le piston (37 ou 76) lorsque la pédale (20) de frein est actionnée, de sorte que la force de réaction agissant sur la pédale (20) de frein est accrue.

2. Dispositif à pédale de frein suivant la revendication 1, **caractérisé en ce qu'**un ressort (50) de rappel est disposé dans l'espace (44) intérieur du cylindre (42 ou 78), ressort par lequel le piston (37 ou 76) est repoussé dans sa position initiale.

3. Dispositif à pédale de frein suivant l'une des revendications précédentes, **caractérisé en ce que** le piston (37 ou 76) comporte une rainure recevant une rondelle (39) en feutre, et en ce que les parois de l'espace (44) intérieur sont mouillées par effet capillaire d'huile hydraulique par la rondelle (39) en feutre qui se trouve en contact avec l'huile (46) hydraulique.

4. Dispositif à pédale de frein suivant l'une des revendications précédentes, **caractérisé en ce que** la tige (30) de pression comporte un piston (27) qui pénètre dans un perçage (23) cylindrique rempli d'huile hydraulique, et en ce que le perçage cylindrique est relié à un capteur (26) de pression qui enregistrer l'effort à la pédale agissant sur la tige (30) de pression.

5. Dispositif à pédale de frein suivant l'une des revendications précédentes, **caractérisé en ce que** la chambre (45) de pression est reliée à un capteur (52) de pression qui enregistre la pression de gaz produite par le piston (37).

6. Dispositif à pédale de frein suivant l'une des revendications précédentes, **caractérisé en ce que** la tige (30) de pression est reliée à un capteur (66) de force qui enregistre la force agissant sur la tige lorsque la pédale (20) de frein est actionnée.

7. Dispositif à pédale de frein suivant l'une des revendications précédentes, **caractérisé en ce que** la chambre (45) de pression est réalisée sous la forme d'une partie de l'espace (44) intérieur du cylindre (42).

8. Dispositif à pédale de frein suivant l'une des revendications précédentes 1 à 6, **caractérisé en ce que** la chambre (82) de pression est réalisée sous la forme d'un récipient sous pression distinct du cylindre (78), et est reliée par l'intermédiaire d'un perçage (79) à l'espace (75) intérieur du cylindre, rempli d'huile (46) hydraulique

9. Dispositif à pédale de frein suivant l'une des revendications précédentes, **caractérisé en ce que** le piston (37) comporte un corps (48) de plus grand diamètre qui est guidé à l'intérieur du cylindre (42), et une région (41) de plus petit diamètre qui est guidée à l'intérieur d'une partie (43) de couvercle fermant le cylindre; (42).

10. Dispositif à pédale de frein suivant la revendication 9, **caractérisé en ce que** le corps (48) est pourvu d'au moins un perçage (58) d'étranglement qui relie une chambre (61) annulaire entourant le piston (37) à une chambre (60) de compensation située en dehors du piston.

11. Dispositif à pédale de frein suivant la revendication 10, **caractérisé en ce que** le corps (48) est pourvu d'au moins un perçage (58) d'étranglement qui relie une chambre (61) annulaire entourant le piston (37) à une chambre (60) de compensation située en dehors du piston.
